# EUROPÄISCHE PATENTSCHRIFT

(11) **EP 1 894 887 B1**
(45) Veröffentlichungstag und Bekanntmachung des Hinweises auf die Patenterteilung: **02.03.2016**
(21) Anmeldenummer: 07114607.0
(22) Anmeldetag: 20.08.2007
(51) Int. Cl.: C01B 7/19, C01B 33/037

(54) **Verfahren zur Aufarbeitung einer Ätzmischung, die bei der Herstellung von hochreinem Silizium anfällt**
Method for processing an etching mixture which is formed during the production of highly pure silicon
Procédé de traitement d'une solution corrosive, formée durant la production de silicium à haute pureté

(30) Priorität: 31.08.2006 DE 102006040830
(43) Veröffentlichungstag der Anmeldung: 05.03.2008
(73) Patentinhaber: Wacker Chemie AG, 81737 München (DE)
(72) Erfinder: Wochner, Hanns Dr., 84489, Burghausen (DE); Gossmann, Christian, 84547, Emmerting (DE); Stoiber, Wolfgang, 84307, Eggenfelden (DE)
(74) Vertreter: Potten, Holger

(56) Entgegenhaltungen:
- EP-A- 0 548 504
- EP-A- 0 610 748
- EP-A- 0 905 796
- WO-A-02/083554
- WO-A-2006/126365
- FR-A- 2 659 956
- US-A- 2 993 757

## Beschreibung

Die Erfindung betrifft ein Verfahren zur Aufarbeitung einer Ätzmischung die bei der Herstellung von hochreinem Silizium anfällt.

Für die Herstellung von Solarzellen oder elektronischen Bauelementen, wie beilspielsweise Speicherelementen oder Mikroprozessoren, wird hochreines Silizium benötigt.

Zur Autreinigung von polykristallinem silizium (Polysilizium) sind daher verschiedene Verfahren bekannt. Diese Reinigungsverfahren nutzen Ätzmischungen, die HF und HNO₃ enthalten, aus denen bei der Reinigung ein Gemisch der Komponenten HF, HNO₃, H₂SiF₆ und HNO₂ entsteht. Der diesbezügliche Stand der Technik ist beispielsweise in US 6,309,467 beschrieben. Derartige Mischungen werden bisher in der Regel neutralisiert und entsorgt. In dem Abstract zu JP 09302483 wird vorgeschlagen, HNO₃ aus der gebrauchten Ätzmischung mittels fraktionierter Destillation zurück zu gewinnen. Dieses Verfahren ist ebenso wie Verfahren, welche z. D. mittels Elektrodialyse und anschließender fraktionierter Destillation die gebrauchte Ätzmischung in die Ausgangsstoffe Flusssäure und Salpetersäure auftrennen und die zurückgewonnenen hochreinen Komponenten Flusssäure und Salpetersäure wieder in den Ätzprozess zurückführen, wegen der dazu erforderlichen aufwändige Apparaturen, wie z. B. Destillationskolonnen, zu teuer und daher unwirtschaftlich.

Das Dokument US 2 993 757 beschreibt ein Verfahren zur Reinigung von polykristallinem Silizium umfassend eine Vorreinigung und eine Hauptreinigung. In der Vorreinigung wird das Halbleitermaterial mit einer oxidierenden Reinigungslösung gewaschen, bei dieser Reinigungslösung handelt es sich um Wasserstoffperoxid, Mineralsäuren, wie Salzsäure, Salpetersäure, Schwefelsäure, Phosphorsäure, Perchlorsäure, Fluorwasserstoffsäure, flüssige, lineare oder verzweigte organische Säuren wie Essigsäure, Ameisensäure, Buttersäure. Bei der Hauptreinigung wird eine Mischung aus Salpetersäure und Fluorwasser-Stoffsäure eingesetzt. Diese Mischung enthält vorzugsweise 60 bis 70 Gew.% Salpetersäure, 1 bis 5 Gew.% Fluorwasserstoffsäure und Wasser.

Das Dokument EP 0 548 504 beschreibt die Destillation einer zur Reinigung von polykristallinem Silicium gebrauchten Ätzmischung, die HF, HNO₃ und H₂SiF₆ enthält, um im Verfahren zur Reinigung von Polykristallinem Silizium wiederverwendet werden zu können. Laut Dokument EP 0 548 504 verhindert die Anwesenheit von HF in der gebrauchten Ätzmischung den Niederschlag von SiO₂ und erlaubt somit die Destillation von der gebrauchten Ätzmischung um sie weiterhin in der Reinigung von polykristallinem Silizium wiederzuverwenden. Das Zudosieren von frischem HF im Destillat in Dokument EP 0 548 504 erlaubt somit die Aufbereitung einer gebrauchten wässrigen Ätzmischung enthaltend HF, HNO₃, H₂SiF₆ und HNO₂.

EP 0 548 504 offenbart nicht und suggeriert nicht die gebrauchte Ätzmischung, als verdünnte Säure enthaltend HF, HNO₃, und H₂SiF₆ (mit einem HNO₃-Gehalt < 40 Gew.%) abzudestillieren, um diese verdünnte Säure, ohne Zusatz frischer Säure, bei der Vorreinigung von polykristallinem Silizium einzusetzen.

Aufgabe der vorliegenden Erfindung ist es, ein einfaches kostengünstiges Verfahren zur Säurerückgewinnung aus einer zur Reinigung von polykristallinem Silizium gebrauchten wässrigen Ätzmischung enthaltend HF, HNO₃, H₂SiF₆ und HNO₂ zur Verfügung zu stellen.

Diese Aufgabe wird gelöst durch ein Verfahren zur Reinigung von polykristallinem Silizium umfassend eine Vorreinigung und eine Hauptreinigung mittels einer wässrigen Ätzmischung enthaltend HF und HNO₃, welches dadurch gekenntzeichnet ist, dass die gebrauchte Ätzmischung enthaltend HF, HNO₃, H₂SiF₆ und HNO₂ aufbereitet wird, indem sie derart absatzweise destilliert wird, dass in einer ersten Fraktion ca. 20 bis 50 Gew.% der gebrauchten Ätzmischung als verdünnte Säure andestilliert werden, wobei die verdünnte Säure über 90 Gew. % des als Hexafluorokieselsäure gelösten Siliziums enthält und es sich um eine wässrige Mischung enthaltend HF, HNO₃ und H₂SiF₆ mit einem HNO₃ Gehalt < 40 Gew.% handelt, die zur Vorreinigung des polykristallinen Siliziums eingesetzt wird, wobei der Wassergchalt in der gebrauchten Ätzmischung um ca. 10 - 30 Gew.% sinkt und diese wasserärmere Mischung bis auf einen Rückstand von ca. 1 - 5 Gew.% der Ausgangsmenge an gebrauchter wässriger Ätzmischung eingedampft: wird und die dabei abdestillierte zweite Fraktion aus einer HF/HNO₃ Mischung mit einem HNO₃-Gehalt > 55 Gew.% und einem Siliziumgehalt kleiner 1 Gew.% besteht und der Ätzmischung zur Hauptreinigung des polykristallinem Siliziums zugesetzt wird.

Die Aufbereitung der gebrauchten Ätzmischung lässt sich in einer einfachen und damit kostengünstigen Apparatur zum Destillieren durchführen, da es auf die vollständige Auftrennung der gebrauchten Ätzmischungen in die Ausgangssäuren Flusssäure und Salpetersäure verzichtet.

Bei der absatzweisen Destillation werden zwei Fraktionen abdestilliert. Die erste Fraktion wird vorzugsweise bei einer Temperatur von 110 bis 200°C vorzugsweise über einen Zeitraum von 5 bis 90 min. genommen. Die Abnahme der ersten Fraktion erfolgt so lange, bis die Analysenergebnisse dieser Fraktion zeigen, dass mindestens 90 Gew.% des in der gebrauchten Ätzmischung anfangs vorhandenen Siliziums in Form von Hexafluorokieselsäure in diese Fraktion abdestilliert sind.

Die Abnahme der zweiten Fraktion erfolgt anschließend vorzugsweise bei einer Temperatur von 100 bis 180°C, vorzugsweise über einen Zeitraum von 2 bis 80 min. Die Abnahme der zweiten Fraktion erfolgt so lange, bis die Flüssigkeit im Destillationskolben bis auf einen Rückstand von ca. 1 - 5 Gew.% der Ausgangsmenge an gebrauchter wässriger Ätzmischung eingedampft ist.

Die aufzuarbeitende gebrauchte wässrige Ätzmischung besteht vorzugsweise aus 40,5 bis 53,9 Gew% Wasser, 40 - 50 Gew. % HNO₃, 0,1 bis 1,5 Gew. % HNO₂, 5 - H Gew. % HF und 1 - 2 Gew. % Si in Form von H₂SiF₆ sowie den Verunreinigungen, die durch das Ätzen des Siliziums in die Ätzmischung eingebracht wurden.

Die in der ersten Fraktion erhaltene verdünnte Säure ist vorzugsweise eine wässrige Mischung enthaltend HF, HNO₃, und H₂SiF₆ mit einem HNO₃ Gehalt < 40 Gew.% sowie mindestens 90 Gew.% des Siliziums der gebrauchten Ätzmischung in Form von Hexafluorokieselsäure.

Das als zweite Fraktion erhaltene Destillat besteht aus einer HF/HNO₃ Mischung mit einem HNO₃-Gehalt > 55 Gew. % und einem Siliziumgehalt von bis zu 10 Gew. % des Ausgangsgehaltes an Silizium in der gebrauchten Ätzmischung, d.h. von weniger als 1 Gew.% der HF/HNO₃ Mischung.

E₃ zeigte sich, dass die mittels des Verfahrens erhaltene HF/HNO₃ Mischung mit einem HNO₃-Gehalt > 55 Gew.%, welche weniger als 10 Gew.% der ursprünglich in der Ätzmischung vorhandenen Menge an Silizium in Form von Hexafluorokieselsäure enthält problemlos bei der Reinigung von polykristallinem Silizium eingesetzt werden kann,

Diese HF/HNO₃ Mischung wird daher zum Nachdosieren bei der Reinigung von polykristallinem Silizium verwendet, besonders bevorzugt zum Nachdosieren in den letzten Säurekreis der Rädersequenz, der HF und HNO₃ enthält, bei der Reinigung von polykristallinem Silizium. Durch die Nachdosierung dieser siliziumarmen HF/HNO₃ Mischung kann der Verbrauch an frischer Flusssäure und frischer Salpetersäure bei der Reinigung von polykristallinem Silizium um ca. 20 - 50 Gew.% gesenkt werden.

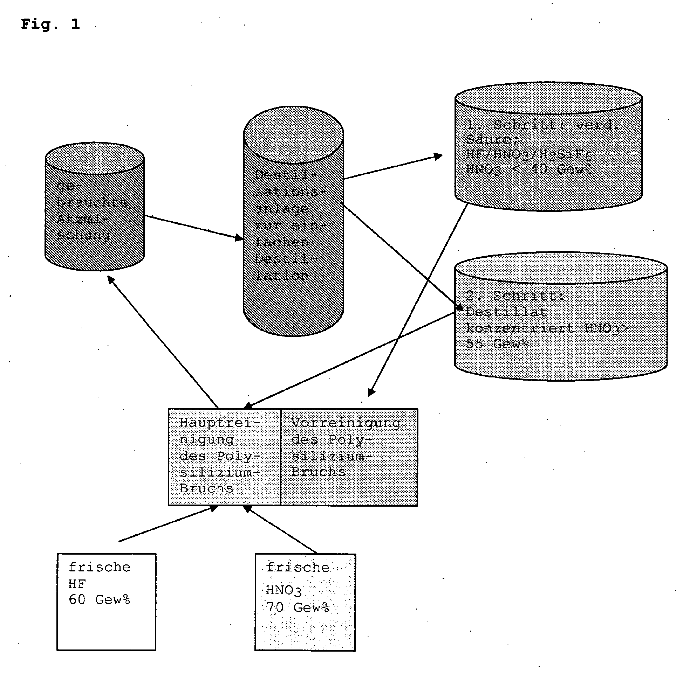

Die im ersten Schritt erhaltene verdünnte Säure wird zur Vorreinigung des polykristallinen Siliziums eingesetzt. Dieses Verfahren ist schematisch in Fig. 1 dargestellt.

Als polykristallines Silizium wird vorzugsweise ein polykristalliner Silizium-Bruch eingesetzt.

Bei der destillativen Abtronnung der zweiten Fraktion verbleiben die Verunreinigungen, die durch das Ätzen des Siliziums in die Ätzmischung eingebracht wurden, im Rückstand. Die Entsorgung des Rückstands kann beispielsweise durch Spülen mit Reinstwasser erfolgen. Das Spülwasser wird anschließend in einer Fluoridfällungs und Denitrifizierungsanlage entsorgt. Hierbei wir die Flusssäure mit Kalkmilch als Calciumfluorid entsorgt. Die Salpetersäure wird durch Bakterien zu N₂ abgebaut.

Die folgenden Beispiele dienen der weiteren Erläuterung der Erfindung:

### Beispiel 1:

600 ml einer gebrauchten Ätzmischung aus der Reinigung von polykristallinem Siliziumbruch enthaltend 6 Ccw% HF, 45 Gew% HNO₃, 12 Gew% H₂SiF₆ und 0,5 Gew% HNO₂ wurden in einer geschlossenen Destillationsapparatur erhitzt und destilliert. Dazu wurde die gebrauchte Ätzmischung in einem Teflonkolben vorgelegt und dort mittels eines Heizpilzes einer Heizleistung von 300 W auf ca. 120°C erhitzt. 5 Minuten nach Reginn des Aufheizens begann die Flüssigkeit zu sieden. Nach weiteren 60 Minuten waren 250 ml verdünnte Säure in einem Auffangbehälter kondensiert. Im Sumpf verblieben 350 ml Säure. Die Zusammensetzung der beiden Fraktionen wurde mit Hilfe der in der DE 198 52 242 A1 beschriebenen DET-Methode bestimmt:

| Sumpfprodukt: | |
|---|---|
| Salpetersäure | 59,8 Gew% |
| Flusssäure | 3,0% Gew% |
| Silizium | 0,1% Gew% |
| H₂O | 37,1% Gew% |
| | |

| Verdünnte Säure: | |
|---|---|
| Salpetersäure | 39,0 Gew% |
| Flusssäure | 6,9 Gew% |
| Silizium | 1,4 Gew% |
| H₂O | 52,7 Gew% |

Die mit der DET-Methode durchgeführten Analysen der Säuren zur Bestimmung der Säurekonzentration zeigten, dass mehr als 90 % des Siliziums abdestilliert sind.

Die 350 ml Sumpfprodukt wurden in einem zweiten Schritt mit einem Heizpilz mit 300 W Leistung innerhalb von 5 Minuten auf 120 Grad erhitzt. Nach 60 Minuten waren 335 ml Destillat in einen Vorratsbehälter übergegangen.

| Zusammensetzung des Destillats | |
|---|---|
| Salpetersäure | 60 Gew% |
| Flusssäure | 3 Gew% |
| Silizium | 0,1 Gew% |
| Wasser | 36,9 Gew% |

Die 15 ml Rückstand wurden entsorgt. Hierbei wurden die 15 ml mit 1 Liter Reinstwasser verdünnt und über eine Fluoridfällungsanlage entsorgt.

### Beispiel 2

Wie in Bsp. 1 beschrieben wurde 100 l Fraktion 1 (verdünnte Säure) und 500 1 der Fraktion 2 hergestellt. Die im zweiten Schritt bei einer Temperatur von 100 bis 180°C erhaltene Fraktion 2 mit der höher konzentrierten Säure wurde in einem Sammelbehälter gesammelt. Aus diesem Sammelbehälter wurde die Mischung in die Ätzmischung zur Hauptreinigung des Polysiliziumbruchs zudosiert. Zur Aufrechterhaltung der Badkonzentration im Ätzbad von 56 Gew% HNO₃ und 6 Gew% HF wurden zusätzlich frische hochkonzentrierte Säuren in Elektronikqualität mit einem Gehalt von 60 Gew% HF und 70 Gew% HNO₃ hinzugefügt. Durch die Zuführung des Destillats konnte die Menge an frischer 60 Gew% Flusssäure und 70 Gew% Salpetersäure um 60 Gew% reduziert werden. Ein mittels einer derartigen Ätzlösung gereinigter Polybruch unterschied sich in seiner Reinheit nicht von einem Polybruch, der ausschließlich mittels einer neuen Ätzmischung hergestellt wurde.

### Beispiel 3

Wie in Bsp. 1 beschrieben wurde 100 1 Fraktion 1 (verdünnte Säure) und 500 1 Fraktion 2 hergestellt. Die bei einer Temperatur von 110 bis 200°C erhaltene verdünnte Säure mit einer Zusammensetzung von 35 Gew% HNO₃, 6,9 Gew% HF und 1,4 Gew% Si wird in die Säurekreise der Vorreinigung von polykristallinem Silizium dosiert. Eine Nachdosierung an hochkonzentrierter 60 Gew% Flusssäure und 70 Gew% Salpetersäure, wie im Beispiel 2 beschrieben, ist hier nicht erforderlich, da eine HF/HNO₃-Mischung mit dieser Konzentration Silizium nur gering angreift und es somit nicht zu einem Verbrauch an HF und Salpetersäure kommt. Ein Polybruch, der mit einer derartigen Ätzlösung vorgereinigt wird, unterscheidet sich nicht von einem Polybruch, der ausschließlich mittels einer frischen Ätzmischung hergestellt wurde.

## Patentansprüche

1. Verfahren zur Reinigung von polykristallinem Silizium umfassend eine Vorreinigung und eine Hauptreinigung mittels einer wässrigen Ätzmischung enthaltend HF und HNO₃, welches **dadurch gekennzeichnet ist, dass** die gebrauchte Ätzmischung enthaltend HF, HNO₃, H₂SiF₆ und HNO₂ aufbereitet wird, indem sie derart absatzweise destilliert wird, dass in einer ersten Fraktion ca. 20 bis 50 Gew.% der gebrauchten Ätzmischung als verdünnte Säure abdestilliert werden, wobei die verdünnte Säure über 90 Gew. % des als Hexafluorokieselsäure gelösten Siliziums enthält und es sich um eine wässrige Mischung enthaltend HF, HNO₃ und H₂SiF₆ mit einem HNO₃ Gehalt < 40 Gew.% handelt, die zur Vorreinigung des polykrislallinen Siliziums eingesetzt wird, wobei der Wassergehalt in der gebrauchten Ätzmischung um ca. 10 - 30 Gew.% sinkt und diese wasserärmere Mischung bis auf einen Rückstand von ca. 1 - 5 Gew.% der Ausgangsmenge an gebrauchter wässriger Ätzmischung eingedampft wird und die dabei abdestillierte zweite Fraktion aus einer HF/HNO₃ Mischung mit einem HNO₃-Gehalt > 55 Gew.% und einem Siliziumgchalt kleiner 1 Gew.% besteht und der Ätzmischung zur Hauptreinigung des polykristallinem Siliziums zugesetzt wird.

2. Verfahren nach Anspruch 1, wobei der nach Abtrennung der zweiten Fraktion verbleibende Rückstand mit Reinstwasser gespült und einer Fluoridfällungs- und Denitrifizierungsanlage zugeführt wird.

3. Verfahren nach Anspruch 1, wobei die Vorreinigung des polykristallinen Siliziums ausschließlich mil der verdünnten Säure erfolgt und keine frischen, hochkonzentrierten HF und HNO₃ zudosiert werden.

4. Verfahren nach einem der Ansprüche 1 bis 3, wobei bei der Hauptreinigung des polykristallinen Siliziums neben der abdestillierten zweiten Fraktion auch frische hochkonzentrierte HF und HNO₃ zudosiert werden, um die Badkonzentrationen stabil zu halten.

## Claims

1. Method for purifying polycrystalline silicon, comprising prepurification and main purification by means of an aqueous etching mixture containing HF and HNO₃, **characterized in that** the used etching mixture containing HF, HNO₃, H₂SiF₆ and HNO₂ is processed by being distilled progressively so that approximately from 20 to 50 wt.% of the used etching mixture is distilled off as dilute acid in a first fraction, the dilute acid containing more than 90 wt.% of the silicon dissolved as hexafluorosilicic acid and being an aqueous mixture containing HF, HNO₃ and H₂SiF₆ with an HNO₃ content < 40 wt.% which is used for prepurifying the polycrystalline silicon, the water contained in the used etching mixture being reduced by approximately 10 - 30 wt.% and this water-depleted mixture being concentrated by evaporation to a residue of about 1 - 5 wt.% of the initial amount of used aqueous etching mixture and the second fraction thereby distilled off consisting of an HF/HNO₃ mixture with an HNO₃ content > 55 wt.% and a silicon content of less than 1 wt.% and being added to the etching mixture for the main purification of the polycrystalline silicon.

2. Method according to Claim 1, wherein the residue remaining after separation of the second fraction is washed with ultrapure water and sent to a fluoride precipitation and denitrification system.

3. Method according to Claim 1, wherein the prepurification of the polycrystalline silicon is carried out exclusively with the diluted acid and no fresh, highly concentrated HF and HNO₃ are added.

4. Method according to any of Claims 1 to 3, wherein during the main purification of the polycrystalline silicon fresh, highly concentrated HF and HNO₃ are added in addition to the distilled-off second fraction in order to keep the bath concentrations stable.

## Revendications

1. Procédé de purification de silicium polycristallin comprenant une pré-purification et une purification principale au moyen d'un mélange de décapage aqueux contenant HF et HNO₃, qui est **caractérisé en ce que** le mélange de décapage usagé contenant HF, HNO₃, H₂SiF₆ et HNO₂ est traité par distillation par intervalles de celui-ci de sorte qu'environ 20 à 50 % en poids du mélange de décapage usagé soit distillé sous la forme d'un acide dilué dans une première fraction, l'acide dilué contenant plus de 90 % en poids du silicium dissous sous la forme d'acide hexafluorosilicique et celui-ci consistant en un mélange aqueux contenant HF, HNO₃ et H₂SiF₆ qui a une teneur en HNO₃ < 40 % en poids, qui est utilisé pour la pré-purification du silicium polycristallin, la teneur en eau du mélange de décapage usagé diminuant d'environ 10 à 30 % en poids et ce mélange appauvri en eau étant évaporé jusqu'à un résidu d'environ 1 à 5 % en poids de la quantité initiale de mélange de décapage aqueux usagé, et la seconde fraction distillée étant constituée d'un mélange HF/HNO₃ ayant une teneur en HNO₃ > 55 % en poids et une teneur en silicium inférieure à 1 % en poids, et étant ajoutée au mélange de décapage pour la purification principale du silicium polycristallin.

2. Procédé selon la revendication 1, dans lequel le résidu restant après la séparation de la seconde fraction est rincé avec de l'eau ultrapure et introduit dans une unité de précipitation de fluorures et de dénitrification.

3. Procédé selon la revendication 1, dans lequel la pré-purification du silicium polycristallin a lieu exclusivement avec l'acide dilué, et du HF et du HNO₃ hautement concentrés frais ne sont pas ajoutés.

4. Procédé selon l'une quelconque des revendications 1 à 3, dans lequel, lors de la purification principale du silicium polycristallin, outre la seconde fraction distillée, du HF et du HNO₃ hautement concentrés frais sont également ajoutés, pour maintenir stables les concentrations du bain.
